# EUROPEAN PATENT APPLICATION

(11) **EP 4 759 471 A1**
(43) Date of publication of application: **17.06.2026**
(21) Application number: 24219785.3
(22) Date of filing: 13.12.2024
(51) Int. Cl.: B23K 26/08, B23K 26/70, B23K 37/006, F16P 1/02

(54) **METHOD FOR PREVENTING SAFETY CELL PENETRATION BY A LASER AND COMBINATION THEREFOR**

(71) Applicant: HGG International B.V., 1771 SW Wieringerwerf (NL)
(72) Inventor: Kistemaker, Jacob Pieter, 1733 BD Nieuwe Niedorp (NL)
(74) Representative: 't Jong, Bastiaan Jacob

(57) **Abstract**

The invention relates to a method for preventing safety cell penetration by a laser tool (7), which laser tool (7) is manipulated by a serial manipulator (2) and enclosed by a safety cell (9, 10), which method comprises the steps of: reading the orientation of each joint (3-6) of the serial manipulator (2), calculating the position and orientation of the laser tool (7) using the read orientations of the joints (3-6) and the geometry of the serial manipulator (2), calculating the intersection point of the laser beam (14) axis of the laser tool (7) with a wall of the safety cell (9, 10),calculating the heat input of the laser beam (14) at the intersection point (15), shutting down the laser beam (14) of the laser tool (7) when the calculated heat input rises above a preset threshold. The invention relates also to a combination of a serial manipulator (2), a laser tool (7) a CNC controller (11), a safety cell 89, 10) and a prevention device.(16).

## Description

The invention relates to a method for preventing safety cell penetration by a laser tool, which laser tool is manipulated by a serial manipulator and enclosed by a safety cell, which method comprises the steps of:
- reading the orientation of each joint of the serial manipulator;
- calculating the position and orientation of the laser tool using the read orientations of the joints and the geometry of the serial manipulator;
- calculating the intersection point of the laser beam axis of the laser tool with a wall of the safety cell.

US 11154947 describes a safety system for a serial manipulator on which a laser, such as a laser cutting tool or welding tool, is mounted. The safety system uses the orientation of each joint of the serial manipulator and the geometry of the serial manipulator to calculate the path of the laser beam. If the calculated path of the laser beam passes an area, in which the laser beam is not allowed, the power of the laser beam is reduced or shut down.

EP 3862147 describes a method in which the position and orientation of a laser tool is calculated based on the orientation of the joints of the serial manipulator and the geometry thereof. The position and orientation of the laser tool is used to calculate the intersection point with a virtual plane, which is preferably the wall of a safety cell, and the distance from the laser tool.

A second laser is used to measure the distance between the laser tool and the surface at which the laser beam falls. If the measured distance corresponds to the calculated distance, the laser beam is shut off.

When using a high-power laser on a serial manipulator to machine a work piece, there is a chance that the laser does not fall on the work piece, but falls on an object behind the work piece. In order to guarantee safety, a so-called safety cell is arranged around the serial manipulator. If the laser beam fails to irradiate the work piece, the walls of the safety cell will catch the laser beam and prevent damage to other objects around the serial manipulator.

A laser safety cell is difficult to make safe. If a high-power lasers irradiates the wall of a safety cell with a longer exposure time, it will heat up to such an extend, that the laser will penetrate it. In prior art safety cells, this is often not addressed or addressed with very expensive double-walled walls with a sensor arranged in the wall that detects penetration. The prior art safety cells either lead to a dangerous solution or an expensive solution.

It is an object of the invention to reduce the above mentioned disadvantages.

This object is achieved according to the invention with a method according to the preamble, which is characterized by:
- calculating the heat input of the laser beam at the intersection point;
- shutting down the laser beam of the laser tool when the calculated heat input rises above a preset threshold.

With the method according to the invention it is calculated what the heat input is at a specific point of the safety wall. By setting a threshold at which the laser beam is shut off, it is ensured that the heat input will not rise above a value at which the wall of the safety wall will fail.

The method according to the invention is independent of the fact whether the laser beam does indeed irradiate the intersection point or that the laser beam irradiates the work piece. This provides for a simple solution, which can easily be applied to existing serial manipulators with laser tools, without the need for additional hardware, such as for example a second laser beam to measure the actual distance between the laser tool and the irradiated point. As long as the serial manipulator moves the laser beam sufficiently, the calculated heat input will not rise above a preset threshold for a intersection point. Only in case there is a malfunction of the serial manipulator or a programmatic error causing the laser beam to be directed to a single point for a prolonged period of time, the method will cause the laser beam to be shut off in time to prevent damage to the safety cell.

In a preferred embodiment of the method according to the invention the heat input of the laser beam at the intersection point is calculated using the laser power, spot size at the intersection point and the duration of exposure.

The heat input at the intersection point corresponds to the laser power times the duration of exposure divided by the spot size. Some additional factors such as reflectivity of the surface of the safety cell can be taken into account by setting the preset threshold.

A further preferred embodiment of the method according to the invention, further comprises the steps of:
- storing the calculated heat input for each calculated intersection point;
- when calculating the heat input of the laser beam at the intersection point, retrieving the stored heat input for the intersection point and adding a time dependent portion of the stored heat input to the calculated heat input.

The heat input at a specific point of the wall of the safety cell wall will dissipate gradually over time. If the same intersection point is irradiated by the laser beam before all heat input of a previous irradiation has been dissipated, the remaining heat input is taken into account by adding this with the calculated heat input.

Preferably, the time dependent portion of the stored heat input is calculated based on the time elapsed since storing the heat input for the intersection point and the heat capacity at the intersection point.

The invention also relates to a combination of:
- a serial manipulator,
- a laser tool mounted on the serial manipulator,
- a CNC controller for controlling the serial manipulator and the laser tool having a laser source,
- a safety cell enclosing the serial manipulator; and
- a prevention device for performing the method according to any of the preceding claims,
which prevention device is connected to the serial manipulator for reading the orientation of each joint and is connected to the laser source of the laser tool to shut down the laser source when the heat input, calculated with the method according to the invention, rises above a preset threshold.

With the combination of the invention, a prevention device could be added to an existing setup of serial manipulator with laser tool and safety cell, without any structural changes of or additions of hardware to the serial manipulator. Only the orientation of the joints needs to be read by the prevention device and a connection needs to be made between the prevention device and the laser source, such that the prevention device can shut off the laser source.

These and other features of the invention will be elucidated in conjunction with the accompanying drawings.
Figure 1 shows a perspective view of a combination according to the invention.
Figure 2 shows a schematic side view of the combination according to figure 1.
Figure 3 shows a diagram of the steps of the method according to the invention.
Figure 4 shows a diagram with the heat input for a specific intersection point.
Figure 5 shows a diagram with the heat input for a second pass for the same intersection point as figure 4.

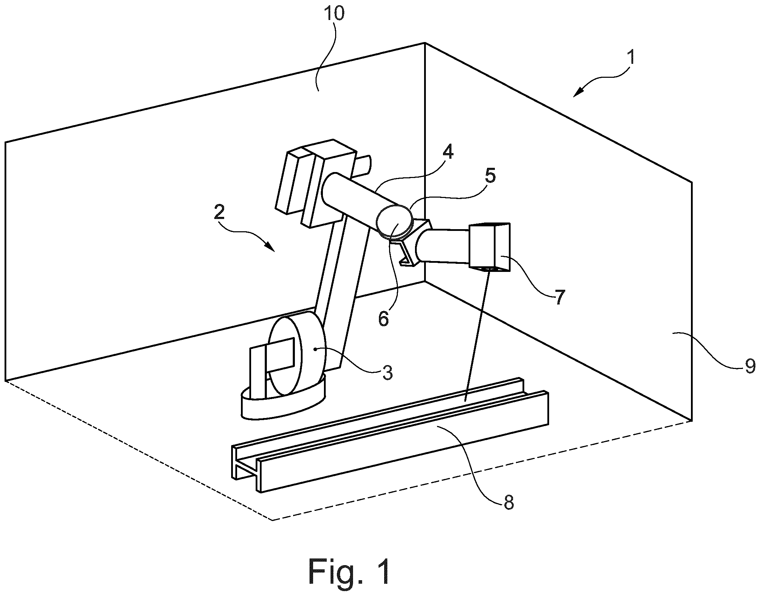

Figure 1 shows a combination 1 according to the invention. The combination 1 has a serial manipulator 2 with a number of joints 3, 4, 5, 6 and at the free end a laser tool 7 for machining a work piece 8.

The serial manipulator 2 and work piece 8 are enclosed by walls 9, 10 of a safety cell. In this figure 1 not all walls of the safety cell are shown, but typically, the serial manipulator 2 and work piece 8 are fully enclosed by the safety cell 9, 10.

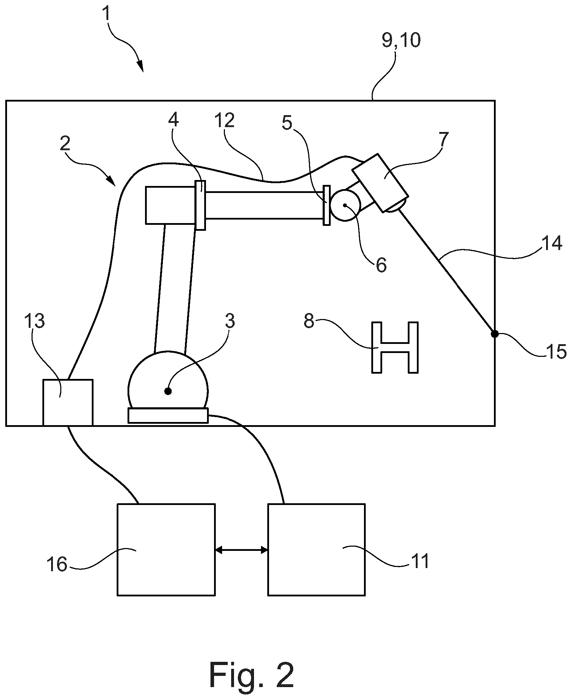

Figure 2 shows a schematic side view of the combination 1 as shown in figure 1. The serial manipulator 2 is controlled by a CNC controller 11, which also controls the laser tool 7. The laser tool 7 is fed via an optical fiber 12 with laser light from a laser source 13. In figure 2 the laser beam 14 irradiated from the laser tool 7 is directed to an intersection point 15 on a wall of the safety cell 9, 10.

The combination 1 has further a prevention device 16, which receives the orientation of the joints 3, 4, 5, 6 from the CNC controller 11. Te prevention device 16 is also connected to the laser source 13 to be able to shut down the laser source 13 in case the heat input at the intersection point 15 rises above a preset threshold.

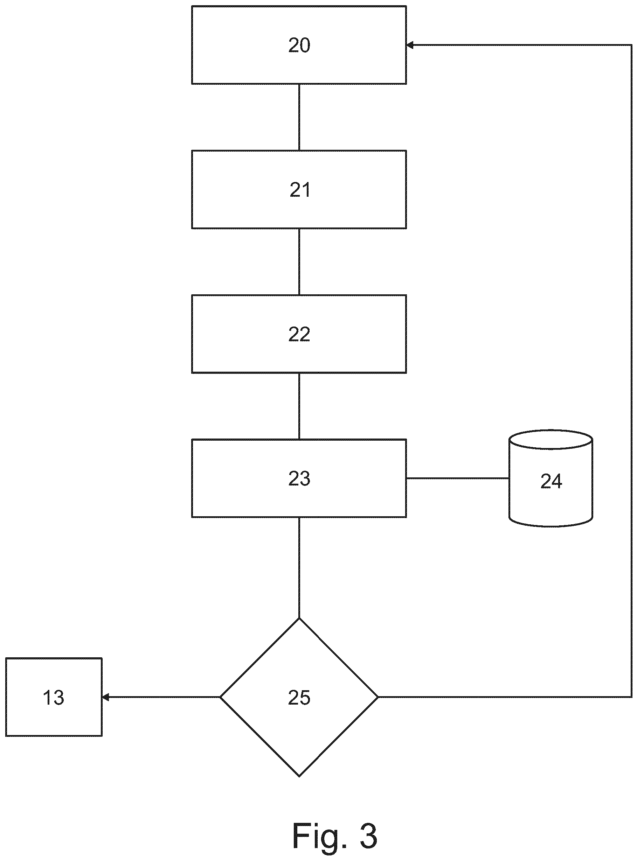

Figure 3 shows a diagram of the steps of the method according to the invention performed in the prevention device 16.

According to the method the orientation of the joints 3, 4, 5, 6 is read at a first step 20. At a second step 21, the position and orientation of the laser tool 7 is calculated based on the readings of the orientation of the joints 3, 4, 5, 6 and the geometry of the serial manipulator 2.

Then, at a third step 22 the intersection point 15 on the wall of the safety cell 9, 10 is calculated. Next, in the fourth step 23, the heat input at the intersection point 15 is calculated based on the laser power, spot size at the intersection point 15 and the duration of exposure. Also stored previous heat input calculations are read from a storage 24 and taken into account when determining the heat input for the intersection point 15.

At the fifth step 25 it is determined whether the calculated heat input rises above a preset threshold. If the threshold is not reached the method continues via step 20 to calculate a next intersection point. If the threshold is reached, then the laser source 13 is shut off.

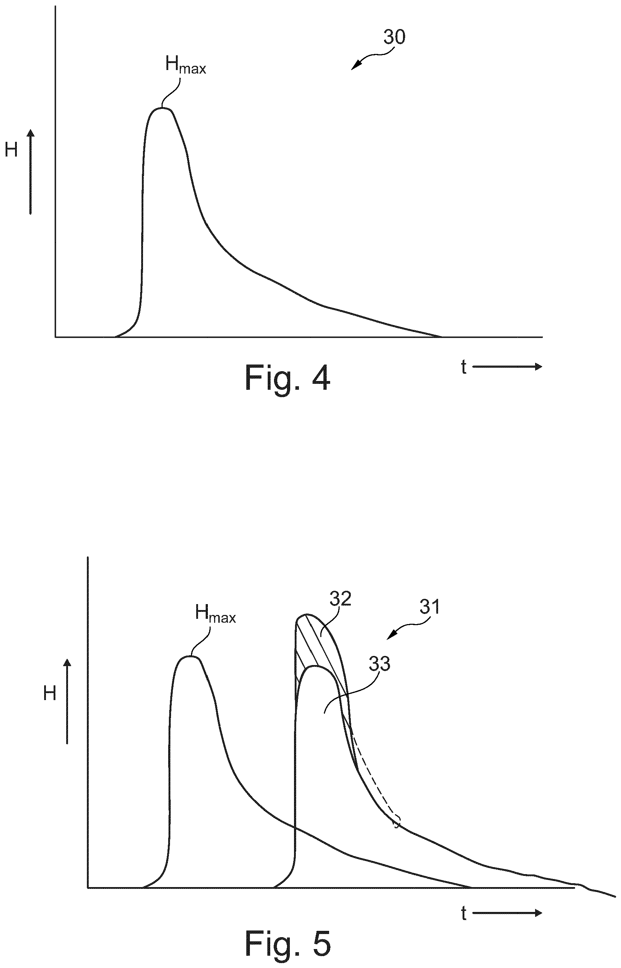

Figure 4 shows a diagram 30 with the heat input H for the intersection point 15 over time t. When the laser is irradiating the intersection point 15, the heat input will rise to Hₘₐₓ. When the intersection point 15 is no longer irradiated by the laser, the heat H will decrease over time t.

Figure 5 shows a diagram 31 with the heat input H for the intersection point 15, where the intersection point 15 is irradiated by the laser beam for a second time shortly after a first time. The calculated heat input Hₘₐₓ is retrieved from the storage 24(see figure 3) and a time dependent portion 32 is added to the calculated heat input 33.

So, when an intersection point is irradiated a number of times shortly after each other, the heat will build up and could cause the method to shut off the laser source after a number of passes.

## Claims

1. Method for preventing safety cell penetration by a laser tool, which laser tool is manipulated by a serial manipulator and enclosed by a safety cell, which method comprises the steps of:
- reading the orientation of each joint of the serial manipulator;
- calculating the position and orientation of the laser tool using the read orientations of the joints and the geometry of the serial manipulator;
- calculating the intersection point of the laser beam axis of the laser tool with a wall of the safety cell,
**characterized by**
- calculating the heat input of the laser beam at the intersection point;
- shutting down the laser beam of the laser tool when the calculated heat input rises above a preset threshold.

2. Method according to claim 1, wherein the heat input of the laser beam at the intersection point is calculated using the laser power, spot size at the intersection point and the duration of exposure.

3. Method according to claim 1 or 2, further comprising the steps of:
- storing the calculated heat input for each calculated intersection point;
- when calculating the heat input of the laser beam at the intersection point, retrieving the stored heat input for the intersection point and adding a time dependent portion of the stored heat input to the calculated heat input.

4. Method according to claim 3, wherein the time dependent portion of the stored heat input is calculated based on the time elapsed since storing the heat input for the intersection point and the heat capacity at the intersection point.

5. Combination of:
- a serial manipulator,
- a laser tool mounted on the serial manipulator,
- a CNC controller for controlling the serial manipulator and the laser tool having a laser source,
- a safety cell enclosing the serial manipulator
**characterized by**
- a prevention device for performing the method according to any of the preceding claims,
which prevention device is connected to the serial manipulator for reading the orientation of each joint and is connected to the laser source of the laser tool to shut down the laser source when the heat input, calculated with the method according to the invention, rises above a preset threshold.
